# FASCICULE DE BREVET EUROPEEN

(11) **EP 3 164 347 B1**
(45) Date de publication et mention de la délivrance du brevet: **13.06.2018**
(21) Numéro de dépôt: 15733453.3
(22) Date de dépôt: 01.07.2015
(51) Int. Cl.: B65G 47/86, B65G 47/90

(54) **INSTALLATION DE TRANSPORT DE RÉCIPIENTS**
BEHÄLTERTRANSPORTVORRICHTUNG
CONTAINER TRANSPORT APPARATUS

(30) Priorité: 02.07.2014 FR 1456345
(43) Date de publication de la demande: 10.05.2017
(73) Titulaire: Serac Group, 72400 La Ferté Bernard (FR)
(72) Inventeur: GRAFFIN, André, Jean, Jacques, Chicago, IL 60185 (US)
(74) Mandataire: Lavialle, Bruno François Stéphane
(86) Numéro de dépôt international: PCT/EP2015/065042
(87) Numéro de publication internationale: WO 2016/001332

(56) Documents cités:
- EP-A1- 2 684 822
- DE-A1- 10 146 118
- JP-A- 2007 176 661
- JP-A- 2009 286 533

## Description

La présente invention concerne le transport de récipients notamment dans une ligne de traitement desdits récipients.

Une ligne de traitement de récipients, par exemple de remplissage, comprend plusieurs postes et notamment un poste de nettoyage et/ou stérilisation, un poste de remplissage proprement dit et un poste de bouchage de récipients. Pour augmenter les cadences, les récipients sont traités alors qu'ils sont déplacés au moyen d'une installation de transport des récipients le long de la ligne.

Une telle installation de transport comprend généralement une succession de plateformes rotatives qui sont pourvues chacune de moyens de retenue des récipients sur la plateforme. Les moyens de retenue sont des assemblages de pièces et comprennent généralement des pinces sélectivement commandées dans une position ouverte et une position fermée au moyen d'actionneurs tels que des vérins pneumatiques ou électromagnétiques, ou bien encore des galets portés par les pinces pour coopérer avec des cames fixes.

Il en résulte une relative complexité structurelle qui augmente le prix des installations et rend difficile le nettoyage de l'installation de transport.

Le document JP-A-2007/176661 décrit une installation de transport de récipients, comprenant une plateforme rotative pourvue en périphérie d'alvéoles délimitées par une paroi latérale pour recevoir une portion du récipient. Une mâchoire articulée à la plateforme au voisinage de chaque alvéole pour être mobile entre une position fermée de retenue du récipient dans l'alvéole et une position ouverte.

Un but de l'invention est de fournir une installation de transport de récipients qui soit plus simple.

A cet effet, on prévoit, selon l'invention, une installation de transport de récipients, comprenant une plateforme rotative pourvue en périphérie d'alvéoles délimitées par une paroi latérale pour recevoir une portion du récipient. Une mâchoire est montée sur la plateforme au voisinage de chaque alvéole pour être mobile entre une position fermée de retenue du récipient dans l'alvéole et une position ouverte. Chaque mâchoire est liée de manière non articulée à la plateforme et comprend un élément élastique qui a une partie fixée à la plateforme au voisinage de l'alvéole pour avoir une extrémité libre s'étendant en regard de l'alvéole et qui est déformable élastiquement entre un état de repos dans lequel l'extrémité libre définit avec la paroi latérale de l'alvéole une section inférieure à une section transversale de la portion de récipient pour définir la position fermée de la mâchoire et un état déformé dans lequel l'extrémité libre définit avec la paroi latérale de l'alvéole une section supérieure à la section transversale de la portion de récipient pour définir la position ouverte de la mâchoire.

Ainsi, les mâchoires ont une structure extrêmement simple. Les mâchoires ne sont pas articulées pour pivoter entre leurs deux positions, c'est la déformation de l'élément élastique qui autorise le déplacement de son extrémité libre. Ceci permet de diminuer le coût de fabrication des mâchoires, d'en faciliter le nettoyage et d'en augmenter la fiabilité.

D'autres caractéristiques et avantages de l'invention ressortiront à la lecture de la description qui suit de modes de réalisation particuliers non limitatifs de l'invention.

Il sera fait référence aux dessins annexés, parmi lesquels :

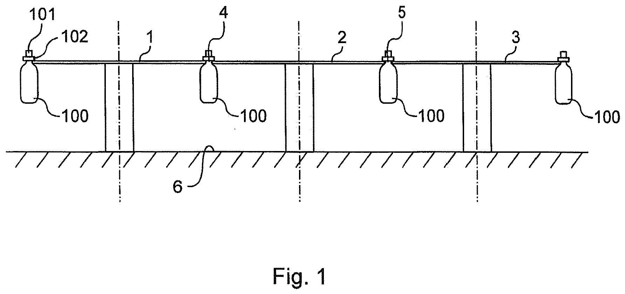

- la figure 1 est une vue schématique en élévation d'une installation de transport selon l'invention,

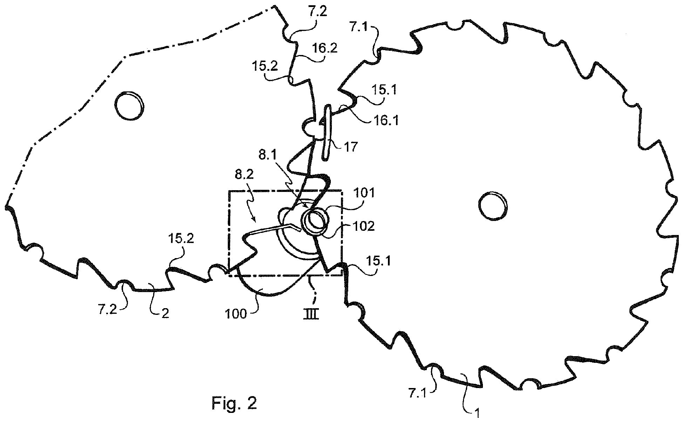

- la figure 2 est une vue schématique en perspective d'une installation de transport selon l'invention,

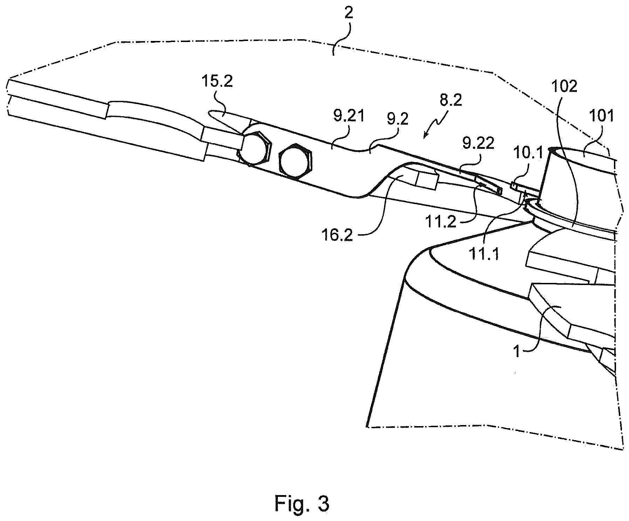

- la figure 3 est une vue schématique, en perspective et de côté, de la zone III de la figure 2,

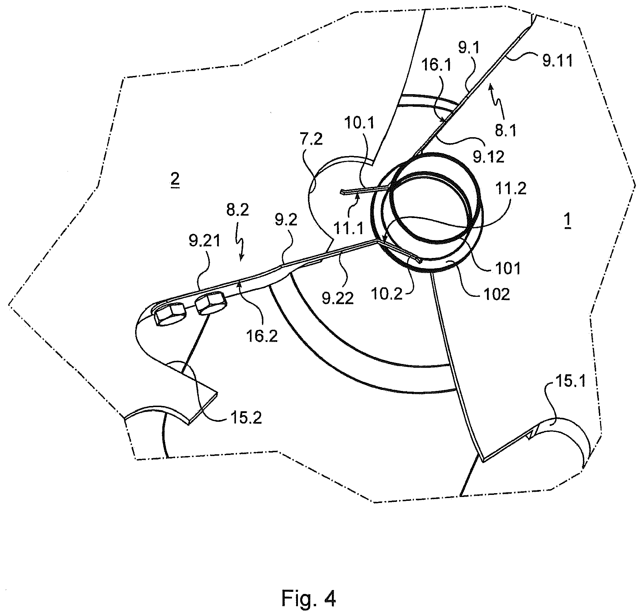

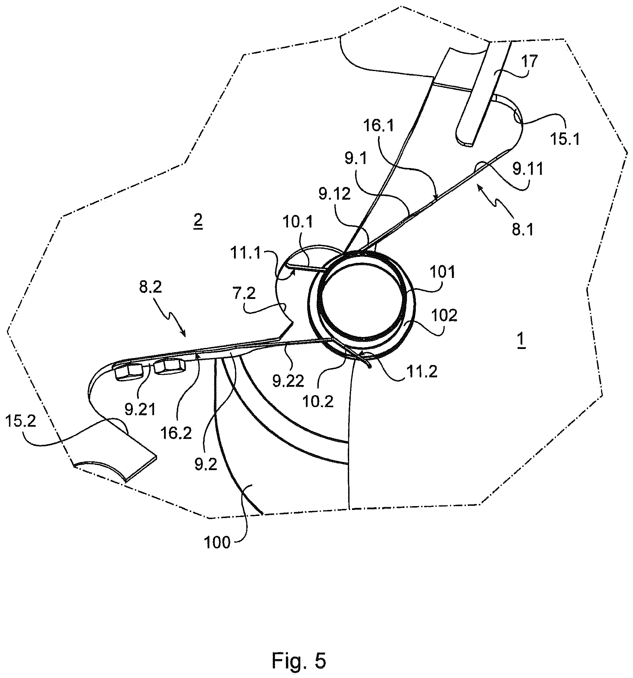

- les figures 4 et 5 sont des vues schématiques partielles de l'installation, en perspective et de dessus, décomposant le transfert d'un récipient entre deux plateformes de l'installation.

En référence aux figures, l'installation de transport selon l'invention est ici décrite en application au traitement de récipients 100 ayant un goulot 101 pourvue d'une collerette 102 s'étendant en saillie latérale du goulot 101.

L'installation de transport selon l'invention comprend une plateforme amont 1, une plateforme intermédiaire 2 tangente à la plateforme amont 1 en un point de tangence 4 et une plateforme aval 3 tangente à la plateforme intermédiaire 2 en un point de tangence 5. Les plateformes 1, 2, 3 sont montées sur un bâti 6 pour pivoter. L'installation de transport comprend également un dispositif de chargement des récipients 100 sur la plateforme amont 1 et un dispositif d'évacuation des récipients 100 de la plateforme aval 3. Ces dispositifs sont connus en eux-mêmes et ne sont donc pas détaillés ici.

La plateforme amont 1 et la plateforme intermédiaire 2 sont toutes deux pourvues en périphérie d'alvéoles 7.1, 7.2. Chaque alvéole 7.1, 7.2 est formée d'une encoche délimitée par une paroi latérale en arc de cercle s'étendant sur un peu moins de 180° et ayant un rayon légèrement supérieur au rayon du goulot 101 pour accueillir une portion du goulot 101, la collerette 102 dudit goulot 101 reposant sur la portion de surface supérieure de la plateforme 1, 2 bordant l'alvéole 7.1, 7.2.

Au voisinage de chaque alvéole 7.1, 7.2, une mâchoire, généralement désignée 8.1, 8.2, est montée pour être mobile entre une position fermée de retenue du récipient dans l'alvéole 7.1, 7.2 et une position ouverte pour l'introduction du goulot 101 d'un récipient 100 dans l'alvéole 7.1, 7.2 et l'extraction du goulot 101 du récipient 100 hors de l'alvéole 7.1, 7.2 (on notera que seule une mâchoire 8.1 et une mâchoire 8.2 sont représentées sur les figures pour ne pas les alourdir). Chaque mâchoire 8.1 s'étend en aval de l'alvéole 7.1 à laquelle elle est associée sur la plateforme amont 1 et chaque mâchoire 8.2 s'étend en amont de l'alvéole 7.2 à laquelle elle est associée sur la plateforme intermédiaire 2.

Chaque mâchoire 8.1, 8.2 comprend un élément élastique 9.1, 9.2 qui a une partie 9.11, 9.21 fixée à la plateforme au voisinage de l'alvéole 7.1, 7.2 pour avoir une extrémité libre 9.12, 9.22 s'étendant en regard de la paroi latérale de l'alvéole 7.1, 7.2 et qui est déformable élastiquement entre un état de repos dans lequel l'extrémité libre 9.12, 9.22 définit avec la paroi latérale de l'alvéole 7.1, 7.2 une section inférieure à une section transversale du goulot 101 et un état déformé dans lequel l'extrémité libre 9.12, 9.22 définit avec la paroi latérale de l'alvéole 7.1, 7.2 une section légèrement supérieure à la section transversale du goulot 101. Lorsqu'un goulot 101 est reçu dans l'alvéole 7.1, 7.2 auquel l'élément élastique 9.1, 9.2 est associé, l'élément élastique 9.1, 9.2 est dans un état intermédiaire dans lequel il exerce élastiquement, sur une portion du goulot 101 reçu dans l'alvéole 7.1, 7.2 s'étendant sous la collerette 102, un effort appliquant le goulot 101 contre la paroi latérale de l'alvéole 7.1, 7.2. L'élément élastique 9.1, 9.2 est ici en métal et plus précisément en acier inoxydable.

Plus précisément, la partie 9.11, 9.21 de l'élément élastique 9.1, 9.2 fixée à la plateforme 1, 2 est ici en forme de lame comportant des faces principales opposées ayant une plus petite dimension mesurable selon une direction sensiblement verticale. Pour la fixation de chaque élément élastique 9.1, 9.2, les plateformes 1, 2 sont pourvues d'encoches périphériques 15.1, 15.2 sensiblement en forme de V comportant une face verticale 16.1, 16.2 non radiale s'étendant en direction de l'alvéole 7.1, 7.2 correspondant à l'élément élastique 9.1, 9.2 pour avoir un bord voisin de la circonférence externe de la plateforme et de l'alvéole 7.1, 7.2 correspondant à l'élément élastique 9.1, 9.2. Les parties 9.11, 9.21 sont chacune vissée

L'extrémité libre 9.12, 9.22 a une forme de tige et comprend une portion terminale 10.1, 10.2 qui s'étend en saillie d'une circonférence externe de la plateforme 1, 2 et qui porte une surface de contact 11.1, 11.2. La portion terminale 10.1, 10.2 est une portion plastiquement déformée de l'extrémité libre 9.1, 9.2. La portion terminale 10.1, 10.2 est agencée de telle manière que, lorsque l'extrémité libre 9.21, 9.22 est dans son état de repos, la surface de contact 11.1, 11.2 soit orientée vers une portion de l'alvéole 7.1, 7.2 opposée à la partie 9.11, 9.12 en formant un angle sensiblement aigu avec une direction générale de l'élément élastique 9.1, 9.2 et une tangente à la plateforme à cet endroit. Ainsi, lorsque le goulot 101 est amené vers l'alvéole 7.1, 7.2 pour y être introduit, il pousse la surface de contact 11.1, 11.2 de l'extrémité libre 9.21, 9.22 et amène l'élément élastique 9.1, 9.2 vers son état déformé. Une fois le goulot 101 reçu dans l'alvéole 7.1, 7.2, l'élément élastique 9.1, 9.2 prend appui sur le goulot 101 sous la collerette 102 par une portion intermédiaire située entre la portion terminale 10.1, 10.2 et la partie 9.11, 9.21 fixée à la plateforme 1, 2.

L'installation comprend un rail 17 s'étendant vers l'aval, par référence à un sens de circulation des récipients 100, depuis le point de tangence 4 des plateformes amont 1 et intermédiaire 2, pour maintenir les récipients sur la plateforme intermédiaire 2 jusqu'à ce que les récipients 100 soient dégagés des mâchoires 8.1 de la plateforme amont 1. Le rail 17 a ici une forme sensiblement en arc de cercle centrée sur le centre de rotation de la plateforme intermédiaire 2.

Le transport d'un des récipients 100 va maintenant être décrit.

Le récipient 100 va en premier lieu être chargé de manière connue en elle-même dans une alvéole 7.1 de la plateforme amont 1 alors que la mâchoire 8.1 correspondante est initialement fermée, c'est-à-dire que l'élément élastique 9.1 est dans son état de repos. Lorsque le goulot 101 est introduit dans l'alvéole 7.1, il pousse la surface de contact 11.1 et amène l'élément élastique 9.1 de la mâchoire 8.1 de son état de repos à son état déformé (correspondant à la position ouverte) en s'opposant à l'effort de rappel résultant de l'élasticité de l'élément élastique 9.1. La surface de contact 11.1 passée, le goulot 101 est reçu dans l'alvéole 7.1 et l'élasticité de l'élément élastique 9.1 ramène l'élément élastique 9.1 vers son état de repos et le maintient dans l'état intermédiaire en appui contre le goulot 101 en s'opposant à l'échappement du goulot 101 hors de l'alvéole 7.1.

Légèrement en amont du point de tangence 4, l'alvéole 7.1 arrive en regard d'une alvéole 7.2 dont la mâchoire 8.2 est initialement en position fermée, c'est-à-dire que l'élément élastique 9.2 est dans son état de repos. Les alvéoles 7.1, 7.2 s'approchant du point de tangence 4, le goulot 101 arrive en contact de la surface de contact 11.2 de l'élément élastique 9.2 de ladite mâchoire 8.2 et amène celle-ci vers sa position ouverte en déformant l'élément élastique 9.2. Le goulot 101 va progressivement s'introduire dans l'alvéole 7.2 du fait de la rotation des plateformes 1, 2 en direction du point de tangence. Au point de tangence 4, le goulot 101 est reçu dans les deux alvéoles 7.1, 7.2 en regard et l'élasticité des éléments élastiques 9.1, 9.2 maintient le goulot dans les alvéoles 7.1, 7.2 respectivement. En quittant le point de tangence 4, le goulot 101 prend contact avec le rail 17 qui maintient le goulot 101 dans l'alvéole 7.2 de la plateforme intermédiaire 2. Le goulot 101 pousse alors l'élément élastique 9.1 de la mâchoire 8.1 et amène la mâchoire 8.1 en position ouverte en s'opposant à l'effort de rappel de l'élément élastique 9.1. Le récipient 100 est ainsi évacué de la plateforme amont 1 et pris en charge par la plateforme intermédiaire 2. L'élasticité de l'élément élastique 9.1 ramène celui-ci dans son état de repos dès que le goulot 101 n'est plus en contact avec la portion terminale 10.1.

Le transfert des récipients de la plateforme intermédiaire 2 vers la plateforme aval 3 est effectué comme suit. La plateforme aval 3 est ici équipée de pinces commandées chacune pour saisir le goulot d'un récipient 100 reçu dans une alvéole 7.2 en regard de la pince au point de tangence 5. Le point de tangence 5 passé, la pince s'éloigne de cette alvéole 7.2 du fait de la rotation des plateformes 2, 3 et tire sur le récipient 100 dont le goulot 101 force l'ouverture de la mâchoire 8.2. Ainsi, lorsque le goulot 101 est évacué de l'alvéole 7.2, il pousse l'extrémité libre 10.2 et amène l'élément élastique 9.2 dans son état déformé. L'élasticité de l'élément élastique 9.2 ramène celui-ci dans son état de repos dès que le goulot 101 n'est plus en contact avec la portion terminale 10.2.

L'évacuation des récipients de la plateforme aval 3 est réalisée de manière classique.

Bien entendu, l'invention n'est pas limitée aux modes de réalisation décrits mais englobe toute variante entrant dans le champ de l'invention telle que définie par les revendications.

En particulier, les plateformes amont et/ou aval peuvent avoir une structure différente de celle décrite, et comprendre des pinces commandées ou des mâchoires telles que celles décrites.

On notera que la forme de lame de la partie 9.11, 9.12 de l'élément élastique 9.1, 9.2 facilite sa fixation à la plateforme 1, 2 (ici par des vis traversant ladite partie), cette partie peut avoir une autre forme et par exemple une forme filaire. De la même manière, bien qu'ici l'extrémité libre 9.12, 9.22 ait une forme filaire, elle peut avoir d'autre forme et par exemple une forme de lame.

L'élément élastique 9.1, 9.2 peut être réalisé en une seule pièce ou en plusieurs, par exemple deux pièces soudées l'une à l'autre.

L'élément élastique 9.1, 9.2 peut être fixé directement à la plateforme 1, 2 ou être fixé à une pièce elle-même fixée sur la plateforme 1, 2. L'élément élastique 9.1, 9.2 peut être fixé contre une surface latérale périphérique de la plateforme 1, 2 ou contre une surface supérieure ou inférieure de la plateforme 1, 2.

Les récipients 100 peuvent être supportés par une autre partie que la collerette 102 (les récipients peuvent être dépourvus de collerette).

## Revendications

1. Installation de transport de récipients, comprenant une plateforme rotative (1, 2) pourvue en périphérie d'alvéoles (7.1, 7.2) délimitée par une paroi latérale pour recevoir une portion du récipient, une mâchoire (8.1, 8.2) étant montée sur la plateforme au voisinage de chaque alvéole pour être mobile entre une position fermée de retenue du récipient dans l'alvéole et une position ouverte, **caractérisée en ce que** chaque mâchoire est liée de manière non articulée à la plateforme et comprend un élément élastique (9.1, 9.2) qui a une partie (9.11, 9.21) fixée à la plateforme au voisinage de l'alvéole pour avoir une extrémité libre (9.12, 9.22) s'étendant en regard de l'alvéole et qui est déformable élastiquement entre un état de repos dans lequel l'extrémité libre définit avec la paroi latérale de l'alvéole une section inférieure à une section transversale de la portion du récipient pour définir la position fermée de la mâchoire et un état déformé dans lequel l'extrémité libre définit avec la paroi latérale de l'alvéole une section supérieure à la section transversale de la portion du récipient pour définir la position ouverte de la mâchoire.

2. Installation selon la revendication 1, dans laquelle la partie (9.11, 9.21) de l'élément élastique (9.1, 9.2) fixée à la plateforme (1, 2) est en forme de lame comportant des faces principales ayant une plus petite dimension mesurable selon une direction sensiblement verticale.

3. Installation selon la revendication 1 ou 2, dans laquelle l'extrémité libre (9.12, 9.22) de l'élément élastique (9.1, 9.2) est en forme de tige.

4. Installation selon l'une quelconque des revendications précédentes, dans laquelle la plateforme (2) est une plateforme intermédiaire bordée par une unité d'amenée des récipients dans les alvéoles (7.2) et l'extrémité libre (9.22) de chaque élément élastique (9.2) comporte une surface de contact (11.2) vers une portion de l'alvéole opposée à la partie (9.21) de l'élément élastique fixée à la plateforme en formant un angle sensiblement aigu avec une direction générale de l'élément élastique de l'alvéole lorsque l'extrémité libre est dans son état de repos de telle manière que, lorsque la portion de récipient est introduite dans l'alvéole, elle pousse la surface de contact de l'extrémité libre et amène l'élément élastique vers son état déformé.

5. Installation selon la revendication 4, dans laquelle l'extrémité libre (9.22) comprend une portion terminale (10.2) qui s'étend en saillie transversale d'une circonférence externe de la plateforme (2) et qui porte la surface de contact, l'élément élastique (9.2) prenant appui sur la portion de récipient (101) reçue dans l'alvéole (7.2) par une portion intermédiaire située entre la portion terminale et la partie (9.21) fixée à la plateforme.

6. Installation selon la revendication 5, dans laquelle la portion terminale (10.1, 10.2) est une portion plastiquement déformée de l'extrémité libre (9.22) .

7. Installation selon la revendication 4, dans laquelle l'unité d'amenée est une plateforme rotative amont (1) qui possède des moyens de retenue des récipients sur la plateforme amont et qui tangente la plateforme intermédiaire (2) en un point de tangence (4).

8. Installation selon la revendication 7, dans laquelle la plateforme amont (1) est pourvue, comme la plateforme intermédiaire (2), d'alvéoles (7.1) et de mâchoires (8.1) formant les moyens de retenue, chaque mâchoire (8.1, 8.2) s'étendant en aval de l'alvéole (7.1) à laquelle elle est associée sur la plateforme amont (1) et en amont de l'alvéole (7.2) à laquelle elle est associée sur la plateforme intermédiaire (2), et un rail (17) s'étend sensiblement en aval du point de tangence (4) des plateformes, par référence à un sens de circulation des récipients, pour maintenir les récipients sur la plateforme intermédiaire jusqu'à ce que les récipients soient dégagés des moyens de retenue de la plateforme amont.

9. Installation selon l'une quelconque des revendications précédentes, dans laquelle la plateforme (2) est bordée par une unité d'évacuation des récipients hors des alvéoles, et l'unité d'évacuation est agencée pour saisir chaque récipient (100) et extraire la portion de récipient (101) hors de l'alvéole (7.2) de telle manière que lorsque la portion de récipient est évacuée de l'alvéole elle pousse l'extrémité libre (9.22) et amène l'élément élastique (9.2) dans son état déformé.

## Patentansprüche

1. Behältertransportanlage, umfassend eine sich drehende Plattform (1, 2), die am Umfang mit Zellen (7.1, 7.2) versehen ist, die von einer Seitenwand begrenzt sind, um einen Abschnitt des Behälters aufzunehmen, wobei eine Spannbacke (8.1, 8.2) an der Plattform nahe jeder Zelle montiert ist, um zwischen einer geschlossenen Halteposition zum Halten des Behälters in der Zelle und einer geöffneten Position beweglich zu sein, **dadurch gekennzeichnet, dass** jede Spannbacke auf nicht gelenkige Weise mit der Plattform verbunden ist und ein elastisches Element (9.1, 9.2) umfasst, das einen Teil (9.11, 9.21) hat, der an der Plattform nahe der Zelle befestigt ist, um ein freies Ende (9.12, 9.22) zu haben, das sich gegenüber der Zelle erstreckt und das elastisch zwischen einem Ruhezustand, in dem das freie Ende mit der Seitenwand der Zelle einen Schnitt definiert, der kleiner als ein Querschnitt des Abschnittes des Behälters ist, um die geschlossene Position der Spannbacke zu definieren, und einem verformten Zustand verformbar ist, in dem das freie Ende mit der Seitenwand der Zelle einen Schnitt definiert, der größer als der Querschnitt des Abschnittes des Behälters ist, um die geöffnete Position der Spannbacke zu definieren.

2. Anlage nach Anspruch 1, bei der der Teil (9.11, 9.21) des elastischen Elements (9.1, 9.2), der an der Plattform (1, 2) befestigt ist, die Form eines Blattes hat, das Hauptflächen umfasst, die eine kleinere Abmessung haben, die in einer im Wesentlichen vertikalen Richtung messbar ist.

3. Anlage nach Anspruch 1 oder 2, bei der das freie Ende (9.12, 9.22) des elastischen Elements (9.1, 9.2) die Form einer Stange hat.

4. Anlage nach einem der vorhergehenden Ansprüche, bei der die Plattform (2) eine Zwischenplattform ist, die von einer Zuführeinheit zum Zuführen von Behältern in die Zellen (7.2) begrenzt ist, und das freie Ende (9.22) jedes elastischen Elements (9.2) eine Kontaktfläche (11.2) in Richtung eines Abschnittes der Zelle hat, die dem Teil (9.21) des elastischen Elements entgegengesetzt ist, der an der Plattform befestigt ist, während ein im Wesentlichen spitzer Winkel mit einer Hauptrichtung des elastischen Elements der Zelle gebildet wird, wenn das freie Ende in seinem Ruhezustand ist, derart, dass, wenn der Behälterabschnitt in die Zelle eingefügt wird, er gegen die Kontaktfläche des freien Endes drückt und das elastische Element in seinen verformten Zustand bringt.

5. Anlage nach Anspruch 4, bei der das freie Ende (9.22) einen Endabschnitt (10.2) umfasst, der transversal von einem Außenumfang der Plattform (2) absteht und der die Kontaktfläche trägt, wobei sich das elastische Element (9.2) auf den in der Zelle (7.2) aufgenommenen Behälterabschnitt (101) über einen Zwischenabschnitt stützt, der sich zwischen dem Endabschnitt und dem an der Plattform befestigten Abschnitt (9.21) befindet.

6. Anlage nach Anspruch 5, bei der der Endabschnitt (10.1, 10.2) ein plastisch verformter Abschnitt des freien Endes (9.22) ist.

7. Anlage nach Anspruch 4, bei der die Zuführeinheit eine stromaufwärtige sich drehende Plattform (1) ist, die Haltemittel zum Halten der Behälter an der stromaufwärtigen Plattform hat und die die Zwischenplattform (2) in einem Tangentenpunkt (4) berührt.

8. Anlage nach Anspruch 7, bei der die stromaufwärtige Plattform (1), wie die Zwischenplattform (2), mit Zellen (7.1) und Spannbacken (8.1) versehen ist, die die Haltemittel bilden, wobei sich jede Spannbacke (8.1, 8.2) stromabwärts der Zelle (7.1) erstreckt, der sie auf der stromaufwärtigen Plattform (1) zugeordnet ist, und stromaufwärts der Zelle (7.2), der sie auf der Zwischenplattform (2) zugeordnet ist, und sich eine Schiene (17) in Bezug auf eine Zirkulationsrichtung der Behälter im Wesentlichen stromabwärts des Tangentenpunktes (4) der Plattformen erstreckt, um die Behälter an der Zwischenplattform zu halten, bis die Behälter aus den Haltemitteln der stromaufwärtigen Plattform gelöst werden.

9. Anlage nach einem der vorhergehenden Ansprüche, bei der die Plattform (2) von einer Abführeinheit zum Abführen der Behälter aus den Zellen begrenzt ist, und die Abführeinheit so ausgebildet ist, dass sie jeden Behälter (100) greift und den Behälterabschnitt (101) aus der Zelle (7.2) herauszieht, derart, dass, wenn der Behälterabschnitt aus der Zelle abgeführt wird, er gegen das freie Ende (9.22) drückt und das elastische Element (9.2) in seinen verformten Zustand bringt.

## Claims

1. Installation for transporting containers, the installation comprising a rotary platform (1, 2) provided in its periphery with slots (7.1, 7.2), each defined by a lateral wall and for receiving a portion of a container, a jaw (8.1, 8.2) being mounted on the platform in the vicinity of each slot in order to be movable between a closed position for holding a container in the slot and an open position, the installation being **characterized in that** each jaw is attached to the platform with a non-articulated manner and comprises a resilient element (9.1, 9.2) having a portion (9.11, 9.21) fastened to the platform in the vicinity of the slot in order to have a free end (9.12, 9.22) that extends facing the slot and that is elastically deformable between a rest state in which the free end co-operates with the side wall of the slot to define a section smaller than the cross-section of the portion of the container to define the closed position, and a deformed state in which the free end co-operates with the side wall of the slot to define a section greater than the cross-section of the portion of the container to define the open position.

2. Installation according to claim 1, wherein the portion (9.11, 9.21) of the resilient element (9.1, 9.2) that is fastened to the platform (1, 2) is in the form of a blade having main faces with a smaller dimension that is measurable in a direction that is substantially vertical.

3. Installation according to claim 1 or claim 2, wherein the free end (9.12, 9.22) of the resilient element (9.1, 9.2) is in the form of a rod.

4. Installation according to any preceding claim, wherein the platform (2) is an intermediate platform bordered by a feed unit for bringing containers into the slots (7.2) and the free end (9.22) of each resilient element (9.2) includes a contact surface (11.2) towards a portion of the slot opposite from the portion (9.21) of the resilient element fastened to the platform, forming an angle that is substantially acute relative to a general direction of the resilient element of the slot when the free end is in its rest state in such a manner that, when the container portion is inserted in the slot, it pushes against the contact surface of the free end and brings the resilient element towards its deformed state.

5. Installation according to claim 4, wherein the free end (9.22) has a terminal portion (10.2) that projects transversely from an outer circumference of the platform (2) and that carries the contact surface, the resilient element (9.2) bearing against the container portion (101) received in the slot (7.2) via an intermediate portion situated between the terminal portion and the portion (9.21) fastened to the platform.

6. Installation according to claim 5, wherein the terminal portion (10.1, 10.2) is a plastically deformed portion of the free end (9.22).

7. Installation according to claim 4, wherein the feed unit is an upstream rotary platform (1) that possesses means for holding containers on the upstream platform and that is tangential to the intermediate platform (2) at a point of tangency (4).

8. Installation according to claim 7, wherein the upstream platform (1) is provided, like the intermediate platform (2), with slots (7.1) and jaws (8.1) forming holding means, each jaw (8.1, 8.2) extending downstream from the slot (7.1) with which it is associated on the upstream platform (1) or upstream from the slot (7.2) with which it is associated on the intermediate platform (2), and a rail (17) extending substantially downstream from the point of tangency (4) of the platforms relative to the travel direction of the containers in order to keep the containers on the intermediate platform until the containers are disengaged from the holding means of the upstream platform.

9. Installation according to any preceding claim, wherein the platform (2) is bordered by a discharge unit for discharging containers from the slots, and the discharge unit is arranged to take each container (100) and to extract the container portion (101) away from the slot (7.2) in such a manner that when the container portion is discharged from the slot it pushes against the free end (9.22) and brings the resilient element (9.2) into its deformed state.
